# EUROPEAN PATENT APPLICATION

(11) **EP 3 540 598 A1**
(43) Date of publication of application: **18.09.2019**
(21) Application number: 18178010.7
(22) Date of filing: 15.06.2018
(51) Int. Cl.: G06F 9/455, G06F 11/00, G06F 21/54

(54) **METHOD, DEVICE AND SERVER FOR CHECKING A DEFECTIVE FUNCTION**

(30) Priority: 14.03.2018 CN 201810210229
(71) Applicant: Baidu Online Network Technology (Beijing) Co., Ltd., Beijing 100085 (CN)
(72) Inventor: Xia, Liangzhao, Beijing, 100085 (CN); Zheng, Longri, Beijing, 100085 (CN); Hu, Ming, Beijing, 100085 (CN); Bao, Chenfu, Beijing, 100085 (CN); Wei, Tao, Beijing, 100085 (CN)
(74) Representative: Lavoix

(57) **Abstract**

The application provides a method, a device, and a server for checking a defective function that are applied to the defective functions in multiple versions. The method comprises: determining a preset defective function; checking whether there is an exception in a parameter of the preset defective functions; returning information indicating the exception of the parameter to an upper-layer function for calling the preset defective function, in a case that there is the exception of the parameter; and executing the preset defective function in a case that there is no exception of the parameter. In the technical solution of the embodiment of present application, filtering out a preset defective function in which there is an exception in a parameter is performed, and the preset defective function may be executed in a case that there is no exception of the parameter, and thus repairing of the kernel or application may be performed without obtaining the source code of the preset defective function.

## Description

### TECHNICAL FIELD

The present application relates to the field of computer technique, and in particular, to a method, device and server for checking a defective function.

### BACKGROUND

Kernel is the core of an operating system, responsible for managing processes, memory, device drivers, files, and network systems and the like of the operating system, and determining the performance and stability of the system. A conventional method for processing bugs of the kernel by codes, which includes replacing the kernel and restarting the system, cannot meet high reliability requirements. Therefore, there is a need for a method for processing bugs of the kernel by codes, in which kernel functions to be repaired may be updated immediately during the running of the kernel. An application is a computer program that is developed to run on an operating system to accomplish one or more specific tasks. An application may have certain defects during being applied, and it is needed to write a program for processing the defects as bugs processing codes during subsequent maintenance.

In response to the above identified problems, conventional technique of bug processing codes check a function of the kernel or the application in the form of memory bug checking codes during the running of the kernel or the application, in which it is not needed to replace the entire kernel or the application, thus facilitating to improve the reliability of the system.

However, such technique of bug processing codes requires source codes of the defective function. In this technique, the source codes of the defective function are directly modified, and the original defective function is replaced after recompiling the defective function. In such a method, it is impossible to perform processing and then perform repairing without source codes.

### SUMMARY

The embodiments of present application provide a method, a device, and a server that do not rely on function source codes to process defects of a function, in order to solve or alleviate one or more technical problems in the art, and at least to provide a beneficial choice.

In the first aspect, an embodiment of present application provides a method for checking a defective function, which is applied to the defective function in multiple versions, including:
determining a preset defective function;
checking whether there is an exception in a parameter of the preset defective function;
returning information indicating the exception of the parameter to an upper-layer function for calling the preset defective function, in a case that there is the exception of the parameter; and,
executing the preset defective function in a case that there is no exception of the parameter.

According to an embodiment of the application, after executing the preset defective function, the method further includes:
checking whether there is an exception in a return value and/or parameter of the preset defective function; and
returning information indicating the exception of the return value and/or the return parameter to an upper-layer function for calling the preset defective function.

According to an embodiment of the application, checking whether there is an exception in a parameter of the preset defective function, including:
modifying a preset line of the preset defective function to a jumping instruction in an inline-hooking method,
wherein the jumping instruction is used to call a checking function for checking the parameter, and return value and/or return parameter of the preset defective function.

According to an embodiment of the application, the method further includes:
determining that the preset defective function is a sub-function, and is called multiple times in a parent function of the preset defective function; and
determining a location of the sub-function in the parent function according to an index of the parent function.

According to an embodiment of the application, before determining a preset defective function, the method further includes:
initializing the checking function to obtain a storage space for storing the checking function.

According to an embodiment of the application, after checking whether there is an exception in a parameter of the preset defective function, the method further includes:
uninstalling the checking function to release the storage space for storing the checking function.

In the second aspect, an embodiment of present application provides a method for checking function defects, which is applied to the defective functions in multiple versions. The method includes:
determining a preset defective function;
executing the preset defective function;
checking whether there is an exception in a return value and/or a return parameter of the preset defective function; and
in a case that there is the exception of the return value and/or the return parameter, returning information indicating the exception of the return value and/or the return parameter to an upper-layer function for calling the preset defective function.

According to an embodiment of the present application, before checking whether there is an exception in the return value and/or the return parameter of the preset defective function, the method further includes:
modifying a preset line of the preset defective function to a jumping instruction in an inline-hooking method;
wherein the jumping instruction is used to call a checking function for checking the return parameter and/or the return value of the preset defective function.

According to an embodiment of the present application, the method further includes:
determining that the defective function is a sub-function, and is called multiple times in a parent function of the preset defective function; and
determining a location of the sub-function in the parent function according to an index of the parent function.

According to an embodiment of the present application, before determining a preset defective function, the method further includes:
initializing the checking function to obtain a storage space for storing the checking function.

According to an embodiment of the present application, after checking whether there is the exception in the return value and/or return parameter of the preset defective function, the method further includes:
uninstalling the checking function to release the storage space for storing the checking function.

In a third aspect, an embodiment of present application provides a device for checking function defects. The device includes:
a first location-determining module configured to determine a preset defective function;
a first checking module configured to check whether there is an exception in a parameter of the preset defective function;
a first exception-returning module configured to return information indicating the exception of the parameter to an upper-layer function for calling the preset defective function, in a case that there is the exception of the parameter of the preset defective function; and
an executing module configured to execute the preset defective function in a case that there is no exception of the parameter of the preset defective function.

According to an embodiment of the present application, the device further includes:
a second checking module configured to check whether there is an exception in a return value and/or return parameter of the preset defective function after the executing module executes the preset defective function; and
a second exception-returning module configured to return information indicating the exception of the return value and/or return parameter to the upper-layer function for calling the preset defective function in a case that there is the exception of the return value and parameter of the preset defective function.

According to an embodiment of the present application, the first check module includes:
a jumping unit configured to modify a preset line of the preset defective function to a jumping instruction in an inline-hooking method,
wherein the jumping instruction is used to call a checking function for checking the parameter, and return value and/or return parameter of the preset defective function.

The second check module includes:
a second jumping unit configured to modify a preset line of the preset defective function to a jumping instruction in an inline-hooking method,
wherein the jumping instruction is used to call a checking function for checking the return value and/or return parameter of the preset defective function.

According to an embodiment of the present application, the device further includes:
a second location-determining module configured to determine that the preset defective function is a sub-function, and is called multiple times in a parent function of the preset defective function, and determine a location of the sub-function in the parent function according to an index of the parent function.

According to an embodiment of the present application, the device further includes:
an initializing module configured to initialize a checking function to obtain a storage space for storing the checking function.

According to an embodiment of the present application, the device further includes:
a releasing module configured to uninstall the checking function to release the storage space for storing the checking function.

In a fourth aspect, an embodiment of present application provides a device for checking function defects, where the device includes:
a first location-determining module configured to determine a preset defective function;
an executing module configured to execute the preset defective function;
a checking module configured to check whether there is an exception in a return value and/or return parameter of the preset defective function; and
an exception-returning module, configured to return information indicating the exception of the return value and/or return parameter to an upper-layer function for calling the preset defective function in a case that there is the exception in the return value and/or return parameter of the preset defective function.

According to an embodiment of the present application, the check module includes:
a jumping unit configured to modify a preset line of the preset defective function to a jumping instruction in an inline-hooking method;
wherein the jumping instruction is used to call a checking function for checking the return parameter and/or the return value of the preset defective function.

According to an embodiment of the present application, the device further includes:
a second location-determining module configured to determine that the preset defective function is a sub-function, and is called multiple times in a parent function of the preset defective function, and determine a location of the sub-function in the parent function according to an index of the parent function.

According to an embodiment of the present application, the device further includes:
an initializing module configured to initialize the checking function to obtain a storage space for storing the checking function.

According to an embodiment of the present application, the device further includes:
a releasing module configured to uninstall the checking function to release the storage space for storing the checking function.

According to a fifth aspect, an embodiment of present application provides a server, including:
The functions may be implemented by hardware, and may also be implemented by hardware executing corresponding software. The hardware or software includes one or more modules corresponding to the above functions.

In a possible design, the structure of the server includes a processor and a memory for storing a program supporting the server to perform a method for checking function defects in the first aspect. The processor configured to perform Describes the program stored in memory. The server may also include a communication interface for the server to communicate with other apparatuses or communication networks.

In a sixth aspect, an embodiment of present application provides a computer-readable storage medium for storing software instructions used by a device for checking a defective function, including related programs such as performing the method to checking a defective function in the first aspect..

One of the above technical solutions has the following advantages or advantageous effects: filtering out a preset defective function in which there is an exception in an parameter, and executing the preset defective function according to whether there is an exception in the parameter of the preset defective function may be achieved, thus facilitating the repairing of the kernel or application without obtaining the source codes of the preset defective function.

Another technical solution of the above technical solutions has the following advantages or advantageous effects: filtering out a preset defective with an exception in a return value and/or a return parameter by executing the preset defective function firstly and then checking whether there is an exception in the return value and/or return parameter of the preset defective function may be performed, thus facilitating the repairing of the kernel or application without obtaining the source codes of the preset defective function may be achieved.

Yet another technical solution of the above technical solutions has the following advantages or advantageous effects: shorter development period and better stability and compatibility may be obtained because it is not necessary to obtain the source codes of a preset defective function and to write a checking function to replace a preset defective function.

The above summary is for the purpose of illustration only and is not intended to be limiting in any way. In addition to the illustrative aspects, embodiments, and features described above, further aspects, embodiments, and features of present application will be readily apparent by reference to the drawings and the following detailed description.

### BRIEF DESCRIPTION OF THE DRAWINGS

In the drawings, the same reference numerals denote the same or similar parts or elements throughout all the drawings unless otherwise specified. The drawings are not necessarily drawn to scale. It should be understood that these drawings depict only some embodiments disclosed in accordance with present application and should not be construed as limiting the scope of present application.
FIG. 1 is a flowchart of a method for checking a defective function according to a first embodiment of the present application;
FIG. 2 is a flowchart of a method for checking a defective function according to a second embodiment of the present application;
FIG. 3 is a flowchart of a method for checking a defective function according to a third embodiment of the present application;
FIG. 4 is a schematic diagram of a device for checking a defective function according to a fifth embodiment of the present application;
FIG. 5 is a schematic diagram of a device for checking a defective function according to a sixth embodiment of the present application;
FIG. 6 is a schematic diagram of a device for checking a defective function according to a seventh embodiment of the present application;
FIG. 7 is a schematic diagram of a device for checking a defective function according to an eighth embodiment of the present application; and
FIG. 8 is a schematic diagram of a server according to a ninth embodiment of the present application.

### DETAILED DESCRIPTION OF THE EMBODIMENTS

In the following, only certain embodiments are briefly described. As can be recognized by those skilled in the art, various modifications may be made to the described embodiments without departing from the spirit or scope of present application. Therefore, the drawings and the description are substantially regarded as exemplary intrinsically rather than restrictive.

### Embodiment 1

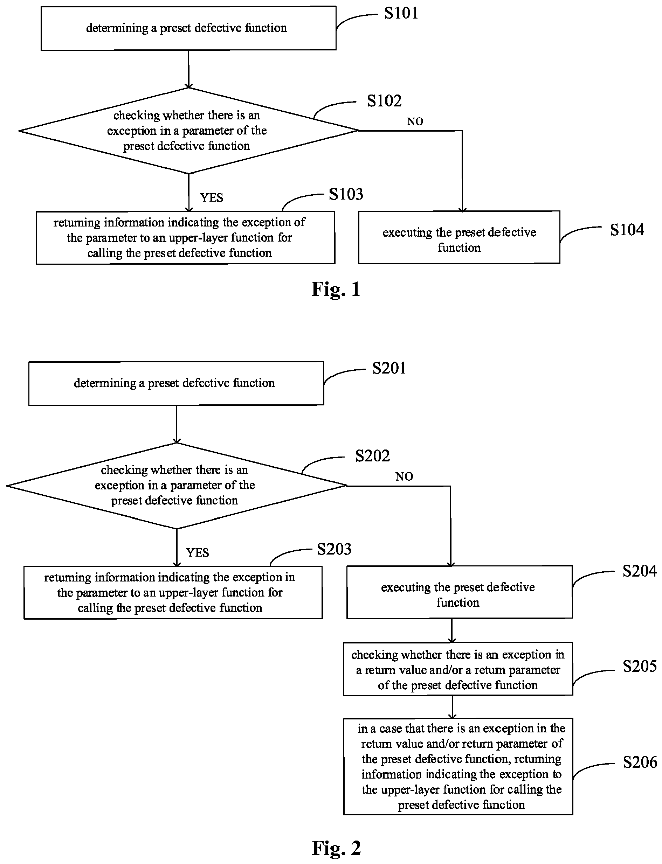

A method for checking a defective function is provided according to a first embodiment of the application. FIG. 1 is a flowchart of a method for checking a defective function according to the first embodiment of present application. The method includes the following steps:
S101: determining a preset defective function.

A programmer may determine some functions having defects through conventional checking techniques. Therefore, in a specific implementation of the present application, the preset defective function may be determine by obtaining the address thereof.

S102: checking whether there is an exception in a parameter of the preset defective function.

When there is an exception in the preset defective function, step S103 is executed; when there is no exception in the preset defective function, step S104 is executed.

Herein, step S102 includes: modifying a preset line of the preset defective function to a jumping instruction in an inline-hooking method. The jumping instruction is used to call a checking function for checking the parameter, and return value and/or return parameter of the preset defective function.

In the following, the inline-hooking method will be introduced briefly. The principle of the inline-hooking method includes: parsing several instructions at the beginning of the defective function; copying the parsed instructions and saving them to an array; replacing these instructions with a jumping instruction for calling the checking function; if it is required to execute the original defective function, executing the saved instructions after checking the checking function; and then jumping back to the addresses following the saved instructions and continuing to execute the defective function. Applied in the embodiments of present application, calling the checking function in an embodiment of present application may be achieved with the inline-hook method.

Herein, when the preset defective function is checked for the first time in an embodiment of present application, a preset line, for example, the first line, of the preset defective function may be replaced with the jumping instruction for calling the checking function, such that the checking function is bound to the preset defective function. Then, each time the preset defective function is executed in the future, the checking function will be executed firstly, so that the checking function will check whether there is an exception in a parameter of the preset defective function.

For some preset defective functions, if directly executed, a system crash or other dangers may occur. Therefore, before executing the defective function, it is necessary to check whether there is an exceptional parameter in the defective function and then filter out these functions with an exceptional parameter.

S103: returning information indicating the exception in the parameter to an upper-layer function for calling the preset defective function.

For example, when the first line of the preset defective function A is executed, the process will jump to the checking function B due to the first line being modified to the jumping instruction, and the parameter of the preset defective function A will be checked by the checking function B; wherein the process executes the checking method according to embodiments of the present application. If the parameter of the preset defective function A is found to have an exception therein, for example, the normal value of the parameter of the function A should be less than 1000, and this value of the function A is greater than 1000 in the event of an exception, then the process will not return to the preset defective function at this moment. In this case, the preset defective function A will return an error code, such as -2, to the upper-layer function for calling the function A so that the upper-layer function repairs the preset defective function A according to other preset logic, for example, replacing the preset defective function A. It is understood to those skilled in the art that, when the checking function is executed in the same environment as the defective function, it is possible to quit the defective function without causing an exception.

S104: executing the preset defective function.

If there is no exception in the parameter of the preset defective function, it is determined that the preset defective function may be executed. In this case, after executing the checking function, the process may return to the preset defective function and the next line of the preset line will be executed. For example, in the case that the preset line is the first line, the process may return to the preset defective function to start to execute the second line of the preset defective function, after the checking function is executed.

In the other hand, if it is determined that there is no exception in the parameter when checking the defective function parameters with the checking function, it continues to execute the defective function.

It should be noted that in an embodiment of present application, when the preset line of the preset defective function is modified, the codes of the preset line are not directly modified, but are firstly stored in the buffer, and then the jumping instruction is inserted to the position of the preset line. The above expression is used for ease of understanding herein. When the parameters of the preset function is checked with the checking function, the codes of the preset line stored in the buffer will be executed. Then, the process will return to the preset defective function to execute the codes of the next line of the preset line if there is no exception in the parameter. For example, it is assumed that the preset line is the first line. When the defective function is checked for the first time, the codes of the first line are stored in the buffer, and then the jumping instruction is inserted at the first line. When the defective function is to be executed, firstly the jumping instruction may be executed, and then the process may jump to the checking function for checking whether there is an exception in the parameter. If it is determined that there is an exception in the parameter, the defective function will return information indicating the error to the upper-layer function. If it is determined that there is no exception in the parameter, the codes of the first line stored in the buffer will be executed, and then the process will return to the second line of the preset defective function for executing the codes thereof.

In fact, in an embodiment of present application, a filtering method is applied to filter out a preset defective function with an exception in a parameter in repairing the kernel or application, so as to facilitate the repairing. In repairing the kernel or application in the art, no matter what kind of a preset defective function it is, the entire preset defective function is directly replaced. Then, not only the source codes of the preset defective function needs to be obtained, but also another set of codes needs to be written based on the source codes of the defective function to replace them, which will undoubtedly affect the efficiency of the repairing. However, with the technical solutions of embodiments of present application, the kernel or application may run with the preset defective function being reserved, and thus may be repaired.

In general, a defective function that may be reserved is a function that does not cause serious consequences for the entire application even if it is reserved. For example, a defective function for performing addition or subtraction may be reserved. As another example, a defective function with shorter codes, such as a defective function with only ten lines of codes may be reserved.

The "repairing" in embodiments of present application refers to stopping execution of a defective function, then jumping to the upper-layer function, and feeding an error code back to the upper-layer calling function.

The checking function in the embodiments of present application may refer to bug processing codes, which are commonly referred to as a patch.

In the technical solutions of the embodiments of present application, a defective function with an exception in the parameter are filtered out, and whether to execute a defective function is determined according to whether there is an exception in the parameter, thus achieving the repairing of the kernel or application without obtaining the source codes of the defective function.

In addition, in the technical solutions of the embodiments of present application, shorter development period may be taken and better stability and compatibility may be obtained because it is not needed to obtain the source codes of a preset defective function and to write a checking function for replacing the preset defective function.

### Embodiment 2

Based on the first embodiment, a method for checking a defective function is provided according to a second embodiment of the present application. As shown in FIG. 2, it is a flowchart of a method for checking a defective function according to an embodiment of present application. The method includes the following steps:
S201: determining a preset defective function.

The above step S201 is identical to step S 101 of Embodiment 1.

S202: checking whether there is an exception in a parameter of the preset defective function.

The above step S202 is identical to step S 102 of Embodiment 1.

S203: in case that there is the exception in the parameter, returning information indicating the exception in the parameter to an upper-layer function for calling the preset defective function.

The above step S203 is identical to step S103 of Embodiment 1.

S204: in a case that there is no exception in the parameter, executing the preset defective function.

The above step S204 is identical to step S104 of Embodiment 1.

S205: checking whether there is an exception in a return value and/or a return parameter of the preset defective function.

Herein, step S205 includes: modifying a preset line of the preset defective function to a jumping instruction in an inline-hooking method; wherein the jumping instruction is used to call a checking function for checking the return value and/or return parameter of the preset defective function.

For the inline-hooking method, please refer to Embodiment 1, which will not be repeated here.

S206: in a case that there is an exception in the return value and/or return parameter of the preset defective function, returning information indicating the exception to the upper-layer function for calling the preset defective function.

Sometimes, in order to avoid bad effects caused by the execution of the defective function as much as possible, the parameters of the preset defective function may be checked before the preset defective function being executed. If there is no exception in the parameters, the return value and/or return parameter of the preset defective function is checked after the preset defective function being executed. As an example, in checking the preset defective function for the first time, the preset line of the preset defective function is modified to a jumping instruction for calling the checking function. For example, the first line of the preset defective function may be modified to the jumping instruction such that when the first line of the defective function is executed, the process jumps to the checking function for checking whether there is an exception in the parameter of the preset defective function. If there is an exception in the parameter, the process returns to the upper-layer function. Obviously, it is unnecessary to check the return value and/or the return parameter. If there is no exception in the parameter, the preset defective function is executed, and then the return value and/or return parameter of the preset defective function is received for checking whether there is an exception therein. If there is no exception in the return value and/or the return parameter, the process returns to the preset defective function, and then following functions of the preset defective function are executed in sequence. If there is no exception in the return value and/or return parameter, the return value and/or return parameter of the defective function is processed according the exception in the return values and/or parameters, for example, the return value and/or return parameter is modified.

According to an implementation, in step S204, the preset defective function may be executed in a manner of being called, because after the calling, a result will be returned to the checking function, and thus the second jumping step may be omitted.

In addition, the preset defective function may be a general function or a sub-function.

If the preset defective function is a general function, checking is directly performed according to the steps described in the above embodiments; if the preset defective function is a sub-function, and is called multiple times in its parent function, the location of the sub-function in the parent function may be further determined according to the index of the parent function after determining the preset defective function.

After determining the location of the sub-function in the parent function, other steps for checking are identical to those of the Embodiment 1 of present application. For example, corresponding to Embodiment 1, it is possible to jump to the checking function before executing the sub-function to check whether there is an exception in a parameter of the sub-function. When there is an exception in the parameter, the process will return information indicating the exception of the parameter to the parent function. When there is no exception of the parameter, the sub-function is executed. For another example, corresponding to the above implementation, it is possible to jump to the checking function before executing the sub-function to check whether there is an exception in the parameter of the sub-function. When there is an exception of the parameter, information indicating the exception of the parameter is returned to the parent function. When there is no exception of the parameter, the sub-function is executed, and then the return value and/or return parameter of the sub-function is received for checking whether there is an exception therein. If there is no exception of the return value and/or the return parameter, it continues to execute other functions. If there is an exception of the return value and/or the return parameter, information indicating an error is returned to the parent function.

In one of the embodiments, before determining the preset defective function, the method further includes:
Initializing the checking function to obtain a storage space for storing the checking function.

Specifically, before determining the preset defective function, it is necessary to initialize the checking function to request an additional memory space for the checking function in the memory; meanwhile, data of a target object may be modified according to the requirements in executing the checking function, for example, a parameter of the preset defective function may be modified.

In another embodiment, after checking the preset defective function, it is also possible to uninstall the checking function if necessary. Therefore, the method in embodiment of present application also includes the step of uninstalling the checking function, which is as follows:
uninstalling the checking function to release the storage space for storing the checking function.

For example, when it is needed to uninstall the checking function since the checking function is updated or the like, an additional storage space previously requested for the checking function is released; meanwhile, if data of the target object may be modified, the modified data of the target object also needs to be restored, for example, restoring a parameter of preset defective functions.

In addition, in embodiments of present application, the state of the patch, for example, the patch version, the use mode of the patch (including the enabled mode and the disabled mode), and the patch name, may be output in real time to determine whether the patch is in the enabled mode. It is also possible to determine whether the patch needs to be updated according to the version of the patch.

The enabled mode of the patch refers to a mode in which the jumping instruction is executed so that the checking function may be executed; the disabled mode of the patch refers to a mode in which the jumping instruction is not executed and thus the checking function cannot be executed, that is, a mode in which the binding between the defective function and the patch is removed.

In addition, in a specific implementation of the embodiment of present application, it is also required to determine the description information of the preset defective function, which mainly includes: (1) the name (func), the address (addr), and the name of the module to which it belongs (mod) of the preset defective function; and (2) when the preset defective function is a sub-function, the name (pfunc), the address (paddr), and the name of the module it belongs to (pmod) of the parent function; (3) when the preset defective function is a sub-function, the index indicating the location of the sub-functions in the parent function (index).

Also based on the filtering method involved in embodiments of present application, the fixing method further includes applying a method of replacing the whole function (func_replace) to repair the kernel or the application. In a specific implementation, it is necessary to firstly obtain the codes of the preset defective function; write a repairing function that may realize the function of the defective function according to the codes; modify a preset line, for example, the second line, of the preset defective function to a jumping instruction in the inline-hooking method to call the repairing function; then execute the repairing function; wherein after executing the repairing function, it does not return the original preset defective function. This is actually replacing the preset defective function with the repairing function.

In the technical solutions of the embodiments of present application, it is possible to check a general function and a sub-function, and when the preset defective function is a sub-function, it is possible to determine the location of the sub-function in the parent function according to the index of the parent function.

### Embodiment 3

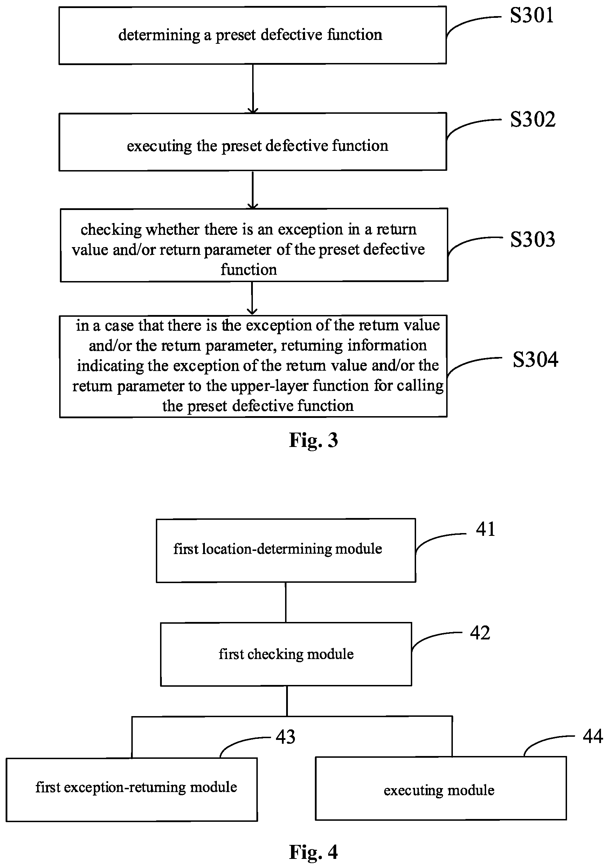

A method for checking a defective function is provided according to a third embodiment of present application. FIG. 3 is a flowchart of a method for checking a defective function according to an embodiment of present application. The method includes:
S301: determining a preset defective function.

A programmer may determine some functions having defects through conventional checking techniques. Therefore, in a specific implementation of present application, the preset defective function may be determined by obtaining the address thereof.

S302: executing the preset defective function.

In an embodiment of present application, when the preset defective function is executed, there may be an exception in its return value and/or return parameter or there may be no exception therein. In this case, it is possible to execute the preset defective function firstly and then apply a checking method according to whether there is an exception in the return value and/or the return parameter.

S303: checking whether there is an exception in a return value and/or return parameter of the preset defective function.

Herein, before step S303, the method further includes:
modifying a preset line of the preset defective function to a jumping instruction in an inline-hooking method; wherein the jumping an instruction is used to call a checking function for checking the return value and/or return parameter of the preset defective function.

As for the inline-hooking method, please refer to Embodiment 1, which will not be repeated here.

In the embodiment of present application, firstly the preset line of the preset defective function is modified to a jumping instruction to call the checking function; when the preset line of the preset defective function are executed, the process will jump to the checking function; then the return value and/or return parameter of the preset defective function is checked by the checking function whether there is an exception therein. If there is no exception in the return value and/or return parameter, the process will return to the preset defective function, and other functions will be executed in sequence; if there is an exception in the return value and/or return parameter, the return value and/or return parameter of the preset defective function will be processed accordingly. For example, if there is a return value, the return value or parameter may be modified, and in some cases the return value may also be abandoned; for another example, if there is no return value, other processing operations may be performed.

S304: in a case that there is the exception of the return value and/or the return parameter, returning information indicating the exception of the return value and/or the return parameter to the upper-layer function for calling the preset defective function.

In the embodiments of present application, in the case that there is the exception of the return value and/or return parameter, processing is required. An exception may occur in a case that there is a return value or in a case that there is no return value. In the case that there is a return value, the return value may be a modifiable return values or an unmodifiable return value. These cases will be illustrated in the following.

In the case that there is a return value in the preset defective function and the return value is modifiable, such as being a pointer, for example, if the reference base of an object of the preset defective function A is changed, it is necessary to check whether there is an exception in a return value of the preset defective function A. Specifically, if a return value of the preset defective function A is less than or equal to 65535 when executed, there is no exception. If this value is greater than 65535, an overflow occurs. Therefore, the return value of the defective function A may be modified, for example, modifying it to 65500, so that the return value of the defective function A is less than 65536.

In the case that there is a return value in the preset defective function, and the return value is an original type, such as an integer variable, then the return value cannot be changed and the return value may be abandoned to process the preset defective function. For example, after the preset defective function A is executed, a return value of the preset defective function A are checked by the checking function B. If the return value of the preset defective function A is a data set and a member of the data set overflows, then the data set will be abandoned, and the process will return to the upper-layer function for calling the preset defective function A.

In the case that there is no return value in the preset defective function, for example, a function for printing a string does not have a return value, the upper-layer function may determine that the preset defective function has not been successfully executed according to the execution logic of a program. Since the execution of the preset defective function depends on the setting of the parameters, even if the checking function is called to feed back to the upper-layer function, the result of being not successfully executed cannot be changed. In this case, it is not necessary to care about the return value of the preset defective function and repairing may be performed by restoring program variables. For example, if a program variable has a values of 0 before execution and a values of 3 after execution, the value of the program variable will be changed from 3 to 0 if the preset defective function is being repaired.

In the above-mentioned cases of embodiments of the present application, it is possible to perform them according to a variety of logics of a program. Therefore, the embodiment of present application may include but not limited to those checking methods listed in the above examples.

In the embodiments of present application, a return value and/or return parameter of the preset defective function are finally processed, such as modifying the program variables, executing other functions to change the logic of the preset defective function, in order to prevent bad effects caused when executing the preset defective function is fed back to its calling function. In other words, these bad effects will be corrected or hidden. In the above steps of the embodiments of present application, it is not necessary to obtain the codes of the preset defective function, and only the codes of a preset line of the preset defective function needs to be modified to a jumping instruction for calling the checking function, thus facilitating the repairing. The development process is easy to implement and the development cycle is short accordingly.

In the technical solutions of the embodiments of present application, filtering out a preset defective function in which there is an exception in a return value and/or return parameter thereof is performed. Specifically, the preset defective function is executed firstly, and then checking whether there is an exception in the return value and/or parameter is performed. Thus the defective function in which there is an exception in a return value and/or return parameter thereof may be checked, and in this way, repairing without obtaining the source code of the preset defective function may be achieved.

In addition, in the technical solutions of the embodiments of present application, shorter development period and better stability and compatibility may be obtained because it is not necessary to obtain the source codes of a preset defective function and to write a repairing function for replacing the preset defective function.

### Embodiment 4

Based on the Embodiment 3, a method for checking a defective function is provided according to a fourth embodiment of present application. Now referring to FIG. 3, based on the method of Embodiment 3, the checking method when the preset defective function is a sub-function is further described in an embodiment of present application.

A function may be a general function or a sub-function. The method for checking a defective function provided in the embodiments of present application may be applied to a general function or a sub-function. However, since a parent function may include more than one sub-function, it is necessary to further determine the location of the sub-function.

Specifically, after determining the preset defective function, the embodiment of present application further includes:
determining that the preset defective function is a sub-function, and is called multiple times in a parent function of the preset defective function, then determining a location of the sub-function in the parent function according to an index of the parent function.

Further, before determining defective function, the method also includes:
initializing the checking function to obtain a storage space for storing the checking function.

Further, after the defective function is checked, the method further includes:
uninstalling the checking function to release the storage space for storing the checking function.

In addition, in the embodiments of present application, it is possible to output the patch state in real time, for example, the patch version information, the patch use mode (including the enabled mode and the disabled mode), and the patch name information, to determine whether the patch is in the enabled mode. It is also possible to determine whether the patch needs to be updated according to the version information of the patch. For details, please refer to the description of Embodiment 2. Such description will not be repeated here.

In addition, in a specific implementation of the embodiment of present application, it is also required to determine the description information of the preset defective function, which mainly includes: (1) the name (func), the address (addr), and the name of the module to which it belongs of the preset defective function (mod); and (2) if the preset defective function is a sub-function, the name (pfunc), the address (paddr), and the name of the module it belongs to (pmod) of the parent function; (3) if the preset defective function is a sub-function, an index indicating the location of the sub-functions in the parent function (index). Please refer to Embodiment 2.

With the technical solutions of the embodiments of present application, it is possible to perform checking of general functions and sub-functions, and when the preset defective function is a sub-function, the location of the sub-function in the parent function may be determined according to the index of the parent function.

### Embodiment 5

A device for checking a defective function is provided by a fifth embodiment of present application. As shown in FIG. 4, it is a device for checking a defective function according to an embodiment of present application. The device includes:
a first location-determining module 41 configured to determine a preset defective function;
a first checking module 42 configured to check whether there is an exception in a parameter of the preset defective function;
a first exception-returning module 43 configured to return information indicating the exception of the parameter to an upper-layer function for calling the preset defective function, in a case that there is the exception of the parameter of the preset defective function; and
an executing module 44 configured to execute the preset defective function in a case that there is no exception of the parameter of the preset defective function.

The embodiment of present application may realize that the defective function may be checked and it is possible to facilitate the repairing of the kernel or application without obtaining the source codes of the defective function. This advantageous effects are the same as the advantageous effects of the first embodiment, and will not be repeated here.

### Embodiment 6

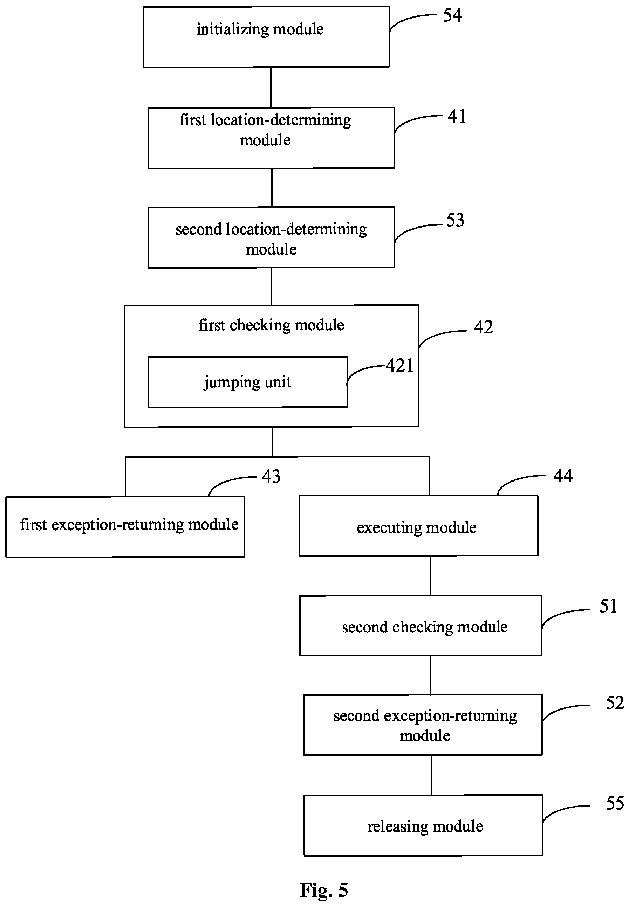

Based on Embodiment 5, a device for checking a defective function is provided by a sixth embodiment of present application. FIG. 5 shows a device for checking a defective function according to an embodiment of present application. The device includes:
a second checking module 51 configured to check whether there is an exception in a return value and/or return parameter of the preset defective function after the executing module executes the preset defective function; and
a second exception-returning module 52 configured to return information indicating the exception of the return value and/or return parameter to the upper-layer function for calling the preset defective function in a case that there is the exception of the return value and parameter of the preset defective function.

Further, the first check module 42 includes:
a jumping unit 421 configured to modify a preset line of the preset defective function to a jumping instruction in an inline-hooking method,
wherein the jumping instruction is used to call a checking function for checking the parameter, and return value and/or return parameter of the preset defective function.

Further, the device further includes:
a second location-determining module 53 configured to determine that the preset defective function is a sub-function, and is called multiple times in a parent function of the preset defective function, and determine a location of the sub-function in the parent function according to an index of the parent function.

Further, the device further includes:
an initializing module 54 configured to initialize a checking function to obtain a storage space for storing the checking function.

Further, the device further includes:
a releasing module 55 configured to uninstall the checking function to release the storage space for storing the checking function.

In the embodiment of present application may achieve to locate the sub-function when the preset defective function is a sub-function. The advantageous effects are the same as those in the second embodiment, and will not be repeated here.

### Embodiment 7

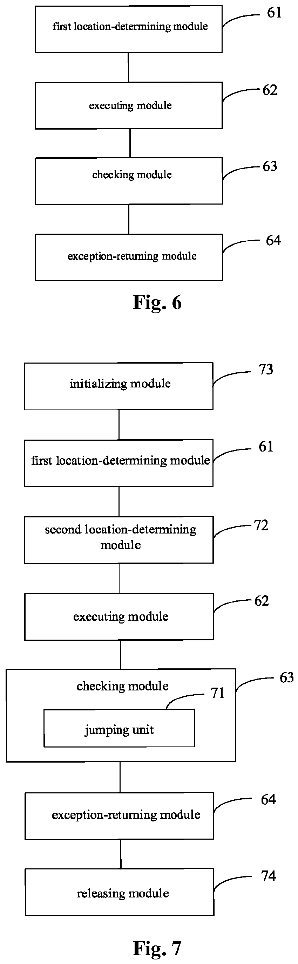

A device for checking a defective function is provided by a seventh embodiment of present application. FIG. 6 shows a device for checking a defective function according to an embodiment of present application. The device includes:
a first location-determining module 61 configured to determine a preset defective function;
an executing module 62 configured to execute the preset defective function;
a checking module 63 configured to check whether there is an exception in a return value and/or return parameter of the preset defective function; and
an exception-returning module 64, configured to return information indicating the exception of the return value and/or return parameter to an upper-layer function for calling the preset defective function in a case that there is the exception in the return value and/or return parameter of the preset defective function.

The embodiment of present application may realize that the defective function may be checked and it is possible to repair the kernel or application without obtaining the source code of the defective function. This advantageous effects are the same as the advantageous effects of the third embodiment, and will not be repeated here.

### Embodiment 8

Based on Embodiment 7, a device for checking a defective function is provided according to an eighth embodiment of present application. As shown in FIG. 7, it is a device for checking a defective function according to an embodiment of present application. The device includes:

The checking module includes:
a jumping unit 71 configured to modify a preset line of the preset defective function to a jumping instruction in an inline-hooking method;
wherein the jumping instruction is used to call a checking function for checking the return parameter and/or the return value of the preset defective function.

Further, the device further includes:
a second location-determining module 72 configured to determine that the preset defective function is a sub-function, and is called multiple times in a parent function of the preset defective function, and determine a location of the sub-function in the parent function according to an index of the parent function.

Further, the device further includes:
an initializing module 73 configured to initialize the checking function to obtain a storage space for storing the checking function.

Further, the device further includes:
a releasing module 74 configured to uninstall the checking function to release the storage space for storing the checking function.

The embodiment of present application may achieve short development period and good stability and the compatibility. This advantageous effects are the same as the advantageous effects of the second embodiment, which is not repeated here.

In the embodiment of present application may achieve to locate the sub-function when the preset defective function is a sub-function. The advantageous effects are the same as those in the fourth embodiment, and will not be repeated here.

### Embodiment 9

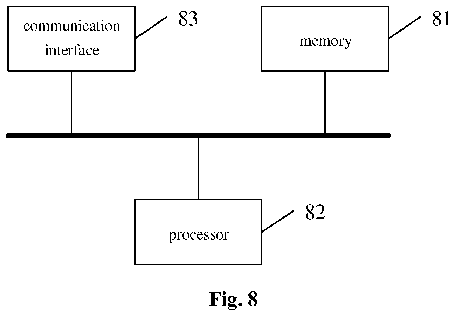

A server is provided according to a ninth embodiment of present application. As shown in FIG. 8, the server includes: a memory 81 and a processor 82. The memory 81 stores a computer program that may run on the processor 82. When the processor 82 executes the computer program, the approach of information classification in the above embodiments may be implemented. The number of the memory 81 and the processor 82 may be one or more.

The device also includes:
a communication interface 83 used for the communication between the memory 81 and the processor 82 and external devices.

The memory 81 may include a high speed RAM memory, and may also include a non-volatile memory such as at least one disk memory.

If the memory 81, the processor 82, and the communication interface 83 are independently implemented, the memory 81, the processor 82, and the communication interface 83 may be connected to each other via bus and complete mutual communication. The bus may be an Industry Standard Architecture (ISA) bus, a Peripheral Component Interconnect (PCI) bus, an Extended Industry Standard Component (EISA) bus, and the like. The bus may be divided into an address bus, a data bus, a control bus, and the like. For ease of illustration, only one thick line is shown in FIG. 8, but it does not mean that there is only one bus or one type of bus.

Optionally, in a specific implementation, if the memory 81, the processor 82, and the communication interface 83 are integrated on one chip, the memory 81, the processor 82, and the communication interface 83 may complete mutual communication through the internal interface.

### Embodiment 10

A computer-readable storage medium is provided according to a tenth embodiment of present application, which stores a computer program. When the program is executed by a processor, the method described in any one of the embodiments shown in FIGS. 1 to 4 is implemented.

In the description of the present specification, the description referring to the terms "one embodiment", "some embodiments", "an example", "a specific example", or "some examples" and the like means particular features, structures, materials, or characteristics included in at least one embodiment or example of present application described in combination with the embodiment or example. Furthermore, the specific features, structures, materials, or characteristics described may be combined in any suitable manner in any one or more of the embodiments or examples. In addition, different embodiments or examples described in this specification and features of different embodiments or examples may be incorporated and combined by those skilled in the art without mutual contradiction.

In addition, the terms "first" and "second" are used for descriptive purposes only and are not to be construed as indicating or implying relative importance or implicitly indicating the number of indicated technical features. Thus, features defining "first" and "second" may explicitly or implicitly include at least one of the features. In the description of the present application, "a plurality of" means two or more, unless expressly limited otherwise.

Any process or method descriptions described in flowcharts or otherwise herein may be understood as representing modules, segments or portions of code that include one or more executable instructions for implementing the steps of a particular logic function or process. The scope of the preferred embodiments of the present application includes additional implementations where the functions may not be performed in the order shown or discussed, including according to the functions involved, in substantially simultaneous or in reverse order, which should be understood by those skilled in the art to which the embodiment of the present application belongs.

Logic and/or steps, which are represented in the flowcharts or otherwise described herein, for example, may be thought of as a sequencing listing of executable instructions for implementing logic functions, which may be embodied in any computer-readable medium, for use by or in connection with an instruction execution system, device, or apparatus (such as a computer-based system, a processor-included system, or other system that fetch instructions from an instruction execution system, device, or apparatus and execute the instructions). For the purposes of this specification, a "computer-readable medium" may be any device that may contain, store, communicate, propagate, or transport the program for use by or in connection with the instruction execution system, device, or apparatus.

The computer-readable medium described in the embodiments of present application may be a computer-readable signal medium or a computer-readable storage medium or any combination thereof. More specific examples (not a non-exhaustive list) of the computer-readable media include the following: electrical connections (electronic devices) having one or more wires, a portable computer disk cartridge (magnetic device), random access memory (RAM), read only memory (ROM), erasable programmable read only memory (EPROM or flash memory), optical fiber devices, and portable read only memory (CDROM). In addition, the computer-readable medium may even be paper or other suitable medium upon which the program may be printed, as it may be read, for example, by optical scanning of the paper or other medium, followed by editing, interpretation or, where appropriate, process otherwise to electronically obtain the program, which is then stored in a computer memory.

In an embodiment of the application, a computer-readable signal medium may include a data signal that propagates in baseband or as part of a carrier wave carrying computer-readable program code. Such propagated data signals may take a variety of forms, including but not limited to electromagnetic signals, optical signals, or any suitable combination of the above. The computer-readable signal medium may also be any computer-readable medium other than a computer-readable storage medium. The computer-readable medium may transmit, propagate, or transport a program used by or in connection with an instruction execution system, input method, or equipment. Program code embodied in a computer-readable medium may be transported using any suitable medium, including but not limited to: wireless, wire, optic cable, radio frequency (RF), etc., or any suitable combination of the above.

It should be understood that various portions of the present application may be implemented by hardware, software, firmware, or a combination thereof. In the above embodiments, multiple steps or methods may be implemented in software or firmware stored in memory and executed by a suitable instruction execution system. For example, if implemented in hardware, as in another embodiment, they may be implemented using any one or a combination of the following techniques well known in the art: discrete logic circuits having a logic gate circuit for implementing logic functions on data signals, application specific integrated circuits with suitable combinational logic gate circuits, programmable gate arrays (PGA), field programmable gate arrays (FPGAs), and the like.

Those skilled in the art may understand that all or some of the steps carried in the methods in the foregoing embodiments may be implemented by a program instructing relevant hardware. The program may be stored in a computer-readable storage medium, and when executed, one of the steps of the method embodiment or a combination thereof is included.

In addition, each of the functional units in the embodiments of the present application may be integrated in one processing module, or each of the units may exist alone physically, or two or more units may be integrated in one module. The above-mentioned integrated module may be implemented in the form of hardware or in the form of software functional module. When the integrated module is implemented in the form of a software functional module and is sold or used as an independent product, the integrated module may also be stored in a computer-readable storage medium. The storage medium may be a read only memory, a magnetic disk, an optical disk, or the like.

The foregoing descriptions are merely specific embodiments of the present application, but not intended to limit the protection scope of the present application. Those skilled in the art may easily conceive of various changes or modifications within the technical scope disclosed herein, all these should be covered within the protection scope of the present application. Therefore, the protection scope of the present application should be subject to the protection scope of the claims.

## Claims

1. A method for checking a defective function, applied to the defective functions in multiple versions, wherein the method comprises:
determining a preset defective function;
checking whether there is an exception in a parameter of the preset defective function;
returning information indicating the exception of the parameter to an upper-layer function for calling the preset defective function, in a case that there is the exception of the parameter; and
executing the preset defective function in a case that there is no exception of the parameter.

2. The method according to claim 1, wherein after executing the preset defective function, the method further comprises:
checking whether there is an exception in a return value and/or a return parameter of the preset defective function; and
returning information indicating the exception of the return value and/or the return parameter to the upper-layer function for calling the preset defective function in a case that there is the exception of the return value and/or the return parameter.

3. The method according to claim 2, wherein checking whether there is an exception in a parameter of the preset defective function comprises:
modifying a preset line of the preset defective function to a jumping instruction in an inline-hooking method,
wherein the jumping instruction is used to call a checking function for checking the parameter, and return value and/or return parameter of the preset defective function.

4. The method according to claim 1, wherein the method further comprises:
determining that the preset defective function is a sub-function, and is called multiple times in a parent function of the preset defective function; and
determining a location of the sub-function in the parent function according to an index of the parent function.

5. The method according to claim 3, wherein before determining a preset defective function, the method further comprises:
initializing the checking function to obtain a storage space for storing the checking function.

6. The method according to claim 5, wherein after checking whether there is an exception in a parameter of the preset defective function, the method further comprises:
uninstalling the checking function to release the storage space for storing the checking function.

7. A method for checking a defective function, applied to the defective functions in multiple versions, wherein the method comprises:
determining a preset defective function;
executing the preset defective function;
checking whether there is an exception in a return value and/or a return parameter of the preset defective function; and
in a case that there is the exception of the return value and/or the return parameter, returning information indicating the exception of the return value and/or the return parameter to an upper-layer function for calling the preset defective function.

8. The method according to claim 7, wherein before checking whether there is an exception in the return value and/or the return parameter of the preset defective function, the method further comprises:
modifying a preset line of the preset defective function to a jumping instruction in an inline-hooking method;
wherein the jumping instruction is used to call a checking function for checking the return parameter and/or the return value of the preset defective function.

9. The method according to claim 7, wherein the method further comprises:
determining that the defective function is a sub-function, and is called multiple times in a parent function of the preset defective function; and
determining a location of the sub-function in the parent function according to an index of the parent function.

10. The method according to claim 8, wherein before determining a preset defective function, the method further comprises:
initializing the checking function to obtain a storage space for storing the checking function.

11. The method according to claim 10, wherein after checking whether there is the exception in the return value and/or return parameter of the preset defective function, the method further comprises:
uninstalling the checking function to release the storage space for storing the checking function.

12. A device for checking a defective function, applied to the defective functions in multiple versions, wherein the device comprises:
a first location-determining module configured to determine a preset defective function;
a first checking module configured to check whether there is an exception in a parameter of the preset defective function;
a first exception-returning module configured to return information indicating the exception of the parameter to an upper-layer function for calling the preset defective function, in a case that there is the exception of the parameter of the preset defective function; and
an executing module configured to execute the preset defective function in a case that there is no exception of the parameter of the preset defective function.

13. The device according to claim 12, wherein the device further comprises:
a second checking module configured to check whether there is an exception in a return value and/or return parameter of the preset defective function after the executing module executes the preset defective function; and
a second exception-returning module configured to return information indicating the exception of the return value and/or return parameter to the upper-layer function for calling the preset defective function in a case that there is the exception of the return value and parameter of the preset defective function.

14. The device according to 13, wherein the first check module comprises:
a jumping unit configured to modify a preset line of the preset defective function to a jumping instruction in an inline-hooking method,
wherein the jumping instruction is used to call a checking function for checking the parameter, and return value and/or return parameter of the preset defective function.

15. The device according to claim 12, wherein the device further comprises:
a second location-determining module configured to determine that the preset defective function is a sub-function, and is called multiple times in a parent function of the preset defective function, and determine a location of the sub-function in the parent function according to an index of the parent function.

16. The device according to claim 14, wherein the device further comprises:
an initializing module configured to initialize a checking function to obtain a storage space for storing the checking function.

17. The device according to claim 16, wherein the device further comprises:
a releasing module configured to uninstall the checking function to release the storage space for storing the checking function.

18. A device for checking a defective function, applied to the defective functions in multiple versions, wherein the device comprises:
a first location-determining module configured to determine a preset defective function;
an executing module configured to execute the preset defective function;
a checking module configured to check whether there is an exception in a return value and/or return parameter of the preset defective function; and
an exception-returning module, configured to return information indicating the exception of the return value and/or return parameter to an upper-layer function for calling the preset defective function in a case that there is the exception in the return value and/or return parameter of the preset defective function.

19. The device according to claim 18, wherein the checking module comprises:
a jumping unit configured to modify a preset line of the preset defective function to a jumping instruction in an inline-hooking method;
wherein the jumping instruction is used to call a checking function for checking the return parameter and/or the return value of the preset defective function.

20. The device according to claim 18, wherein the device further comprises:
a second location-determining module configured to determine that the preset defective function is a sub-function, and is called multiple times in a parent function of the preset defective function, and determine a location of the sub-function in the parent function according to an index of the parent function.

21. The device according to claim 19, wherein the device further comprises:
an initializing module configured to initialize the checking function to obtain a storage space for storing the checking function.

22. The device according to claim 21, wherein the device further comprises:
a releasing module configured to uninstall the checking function to release the storage space for storing the checking function.

23. A server, wherein the server comprises:
one or more processors;
a storage device for storing one or more programs,
wherein the one or more processors executes the programs to implement the method according to any one of claims 1-11.

24. A computer-readable storage medium storing one or more computer programs, wherein the programs implement the method according to any one of claims 1-11 when executed by a processor.
